# EUROPEAN PATENT APPLICATION

(11) **EP 4 838 686 A1**
(43) Date of publication of application: **11.11.2026**
(21) Application number: 25857490.4
(22) Date of filing: 21.08.2025
(51) Int. Cl.: H01M 50/581, H01M 50/593, H01M 50/505

(54) **BATTERY CELL ASSEMBLY AND BATTERY PACK COMPRISING SAME**

(30) Priority: 23.08.2024 KR 20240113566
(71) Applicant: LG Energy Solution, Ltd., Seoul 07335 (KR)
(72) Inventor: YOON, Dong Sik, Daejeon 34122 (KR)
(74) Representative: Plasseraud IP
(86) International application number: PCT/KR2025/012715
(87) International publication number: WO 2026/043302

(57) **Abstract**

According to exemplary embodiments, a battery cell assembly is provided. The battery cell assembly includes: a first battery cell including a first positive terminal and a first negative terminal; a second battery cell including a second positive terminal and a second negative terminal; a first busbar welded to the first negative terminal of the first battery cell and the second positive terminal of the second battery cell, respectively; a first circuit opening device interposed between the first negative terminal and the second positive terminal; and a first insulating layer isolating the first circuit opening device from the first negative terminal, the second positive terminal, and the first busbar.

## Description

### [Technical Field]

The present disclosure relates to a battery cell assembly and a battery pack including the same.

This application claims the benefit of Korean Patent Application No. 10-2024-0113566, filed on August 23, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the cruising range of battery electric vehicles (BEVs) has increased to levels comparable to fuel vehicles, the primary application of secondary batteries is shifting from mobile devices to mobility.

In the current trend emphasizing secondary batteries for mobility, the primary directions for secondary battery technology development are reducing production costs and enhancing safety. Secondary batteries account for the largest portion of BEV manufacturing costs. Therefore, the most critical factor for increasing BEV market share relative to internal combustion engine vehicles is the production cost of secondary batteries. Production cost reduction can be achieved through material savings, reducing the number of production process steps, and shortening the takt time. The safety of secondary batteries is critically important as it directly impacts the lives of mobility passengers. A key challenge for enhancing secondary battery safety is providing cooling solutions for battery packs.

### [Summary]

### [Technical Problem]

The technical problem addressed by the technical concept of the present disclosure is to provide a battery cell assembly with enhanced safety and a battery pack including the same.

### [Technical Solution]

According to exemplary embodiments of the present disclosure for solving the aforementioned problem, a battery cell assembly is provided. The battery cell assembly includes: a first battery cell including a first positive terminal and a first negative terminal; a second battery cell including a second positive terminal and a second negative terminal; a first busbar welded to the first negative terminal of the first battery cell and the second positive terminal of the second battery cell, respectively; a first circuit opening device interposed between the first negative terminal and the second positive terminal; and a first insulating layer isolating the first circuit opening device from the first negative terminal, the second positive terminal, and the first busbar.

The first circuit opening device includes a thermally expandable material.

The first circuit opening device includes a shape-memory alloy.

The first and second battery cells are arranged in a first direction, and the length of the first circuit opening device in the first direction at a first temperature above a critical temperature is longer than the length of the first circuit opening device in the first direction at a second temperature below the critical temperature.

The critical temperature is within the range of 130°C to 190°C.

At the first temperature, the first circuit opening device is configured to disconnect the connection between the first busbar and the positive terminal and the first negative terminal.

The first insulating layer includes a first portion interposed between the first circuit opening device and the first negative terminal, a second portion interposed between the first circuit opening device and the second positive terminal, and a third portion interposed between the first circuit opening device and the first busbar.

The first insulating layer has insulating and adhesive properties.

The first insulating layer is a thermal resin.

The first circuit opening device is embedded in the first insulating layer.

The battery cell assembly includes: a third battery cell comprising a third positive terminal and a third negative terminal; a second busbar welded to the second negative terminal of the second battery cell and the third positive terminal of the third battery cell, respectively; a second circuit opening device interposed between the second negative terminal and the third positive terminal; and a second insulating layer isolating the second circuit opening device from the second negative terminal, the third positive terminal, and the second busbar.

According to exemplary embodiments, a battery pack is provided. The battery pack includes: a pack housing including a base plate; and a plurality of battery cell assemblies on the pack housing, wherein each of the battery cell assembly includes: a first battery cell including a first positive terminal and a first negative terminal; a second battery cell including a second positive terminal and a second negative terminal; a first busbar welded to the first negative terminal of the first battery cell and the second positive terminal of the second battery cell, respectively; a first circuit opening device interposed between the first negative terminal and the second positive terminal; and a first insulating layer isolating the first circuit opening device from the first negative terminal, the second positive terminal, and the first busbar.

The first circuit opening device includes a shape-memory alloy.

The first insulating layer includes a first portion interposed between the first circuit opening device and the first negative terminal, a second portion interposed between the first circuit opening device and the second positive terminal, and a third portion interposed between the first circuit opening device and the first busbar.

The first insulating layer has insulating properties and adhesive properties.

The first insulating layer is a thermal resin.

The first circuit opening device is embedded in the first insulating layer.

### [Advantageous Effects]

The battery cell assembly according to exemplary embodiments of the present disclosure may include an circuit opening device configured to break the electrical connection between the busbar of the battery cell assembly and the electrode terminals of each battery cell at high temperatures. Accordingly, if a thermal runaway event occurs in the battery cell assembly, the electrical connection between adjacent battery cells can be physically severed, and thermal propagation can be delayed, thereby enhancing the safety of the battery cell assembly.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a plan view of a battery cell assembly according to exemplary embodiments.
FIG. 2 shows a portion of FIG. 1.
FIG. 3 is a drawing illustrating the effect of the battery cell assembly according to exemplary embodiments.
FIG. 4 is a plan view of a battery cell assembly according to other exemplary embodiments.
FIG. 5 shows a portion of FIG. 4.
FIG. 6 is a plan view illustrating a battery pack according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

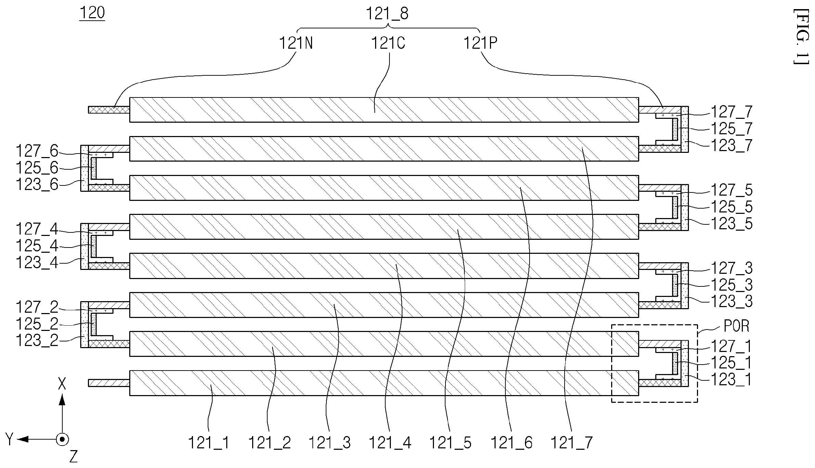

FIG. 1 is a plan view of a battery cell assembly according to exemplary embodiments.

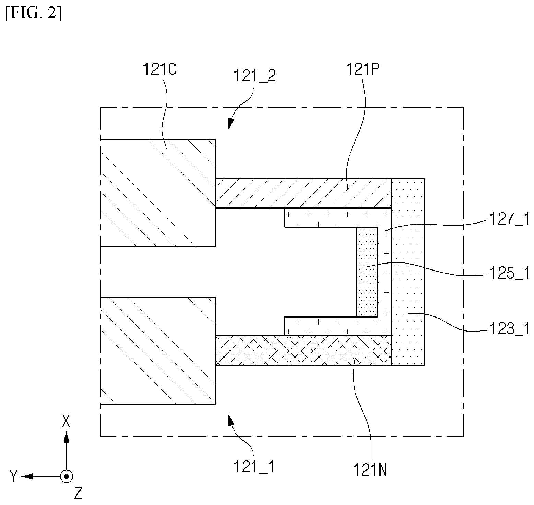

FIG. 2 shows a portion (POR) of FIG. 1.

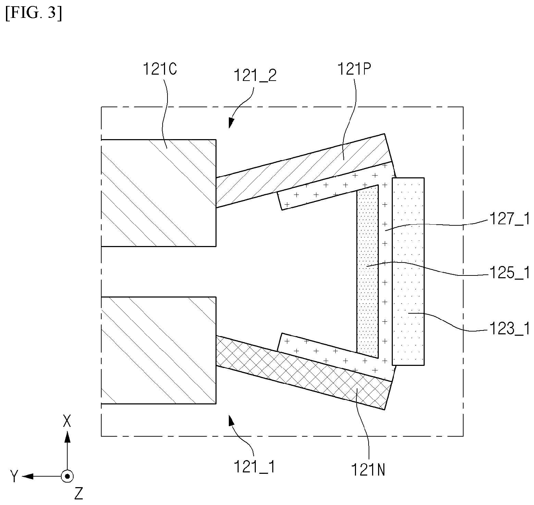

FIG. 3 is a drawing illustrating the effect of the battery cell assembly according to exemplary embodiments.

Referring to FIGS. 1 and 2, the battery cell assembly 120 includes a plurality of battery cells 121_1, 121_2, 121_3, 121_4, 121_5, 121_6, 121_7, 121_8, hereinafter 121_1 to 121_8, a plurality of busbars 123_1, 123_2, 123_3, 123_4, 123_5, 123_6, 123_7, hereinafter 123_1 to 123_7, a plurality of circuit opening devices 125_1, 125_2, 125_3, 125_4, 125_5, 125_6, 125_7, hereinafter 125_1 to 125_7, and a plurality of insulating layers 127_1, 127_2, 127_3, 127_4, 127_5, 127_6, 127_7, hereinafter 127_1 to 127_7.

Each of the plurality of battery cells 121_1~121_8 may be a lithium-ion battery. The plurality of battery cells 121_1~121_8 may be arranged in the X direction. The plurality of battery cells 121_1~121_8 may be electrically connected to each other. Each of the plurality of battery cells 121_1~121_8 may include an electrode assembly, an electrolyte, a case CC, a positive terminal 121P, and a negative terminal 121N.

Each of the plurality of battery cells 121_1~121_8 may be any one of a cylindrical battery cell, a prismatic battery cell, and a pouch-type battery cell. The case CC of the cylindrical battery cell may be a cylindrical metal can. The electrode assembly of the cylindrical battery cell is embedded within the cylindrical metal can. The case CC of a prismatic battery cell may be a prismatic metal can. The electrode assembly of the prismatic battery cell is embedded within the prismatic metal can. The case CC of a pouch-type battery cell may be a pouch sheet. The electrode assembly of the pouch-type battery cell is embedded within the pouch case, which includes an aluminum laminate sheet.

The electrode assembly may include a positive electrode, a negative electrode, and a separator interposed between the positive and negative electrodes. The electrode assembly may be either a jelly-roll type or a stack-type. The jelly-roll type electrode assembly may include a wound structure of a positive electrode, a negative electrode, and a separator interposed between them. The stack-type electrode assembly may include a laminated structure of a plurality of positive electrodes and a plurality of negative electrodes sequentially stacked, and a plurality of separators configured to electrically isolate the plurality of positive electrodes and the plurality of negative electrodes.

The positive terminals 121P of each of the plurality of battery cells 121_1 to 121_8 may be connected to the positive tabs of each of the plurality of positive electrodes of the electrode assembly. The positive terminal 121P of each of the plurality of battery cells 121_1~121_8 may be welded to the positive tab of each of the plurality of positive electrodes of the electrode assembly.

The negative terminals 121N of each of the plurality of battery cells 121_1~121_8 may be connected to the respective negative tabs of the plurality of negative electrodes of the electrode assembly. The negative terminals 121N of each of the plurality of battery cells 121_1~121_8 may be welded to the negative tabs of each of the plurality of negative electrodes of the electrode assembly.

The positive terminal 121P and negative terminal 121N of each of the plurality of battery cells 121_1~121_8 may protrude in the Y direction from the cell case 121C. The Y direction may be substantially perpendicular to the X direction.

According to exemplary embodiments, each of the plurality of battery cells 121_1~121_8 may each be bidirectional cells, and the positive terminal 121P and negative terminal 121N of each of the plurality of battery cells 121_1~121_8 may be located on opposite sides of the cell case 121C, but are not limited thereto. According to exemplary embodiments, each of the plurality of battery cells 121_1~121_8 may be a unidirectional cell, and the positive terminal 121P and negative terminal 121N of each of the plurality of battery cells 121_1~121_8 may be located on the same side of the cell case 121C.

The plurality of battery cells 121_1 to 121_8 may constitute a plurality of banks. FIG. 1 illustrates an example where each of the plurality of banks comprises a single battery cell 121_1 to 121_8, but a person skilled in the art will readily arrive at examples where each of the plurality of banks includes two or more battery cells based on the description herein.

One or more battery cells of each of the plurality of banks may be connected in parallel with each other. The plurality of banks may be connected in series with each other. The number of banks connected in series and the number of battery cells included within the plurality of banks may be determined based on the desired voltage and current output from the battery cell assembly 120.

The plurality of busbars 123_1 to 123_7 can electrically connect plurality of battery cells 121_1 to 121_8. A busbar 123_1 can connect battery cell 121_1 and battery cell 121_2. A busbar 123_2 can connect battery cell 121_2 and battery cell 121_3. A busbar 123_3 can connect battery cell 121_3 and battery cell 121_4. A busbar 123_4 can connect battery cell 121_4 and battery cell 121_5. A busbar 123_5 can connect battery cell 121_5 and battery cell 121_6. A busbar 123_6 can connect battery cell 121_6 and battery cell 121_7. A busbar 123_7 can connect battery cell 121_7 and battery cell 121_8.

The busbar 123_1 may contact the negative terminal 121N of the battery cell 121_1 and the positive terminal 121P of the battery cell 121_2, respectively. The busbar 123_1 may be welded to the negative terminal 121N of the battery cell 121_1 and the positive terminal 121P of the battery cell 121_2, respectively.

The busbar 123_2 may contact the negative terminal 121N of the battery cell 121_2 and the positive terminal 121P of the battery cell 121_3, respectively. The busbar 123_2 may be welded to the negative terminal 121N of the battery cell 121_2 and the positive terminal 121P of the battery cell 121_3, respectively.

The busbar 123_3 may contact the negative terminal 121N of battery cell 121_3 and the positive terminal 121P of battery cell 121_4, respectively. The busbar 123_3 may be welded to the negative terminal 121N of the battery cell 121_3 and the positive terminal 121P of the battery cell 121_4, respectively.

The busbar 123_4 may contact the negative terminal 121N of the battery cell 121_4 and the positive terminal 121P of the battery cell 121_5, respectively. The busbar 123_4 may be welded to the negative terminal 121N of the battery cell 121_4 and the positive terminal 121P of the battery cell 121_5, respectively.

The busbar 123_5 may contact the negative terminal 121N of the battery cell 121_5 and the positive terminal 121P of the battery cell 121_6, respectively. The busbar 123_5 may be welded to the negative terminal 121N of the battery cell 121_5 and the positive terminal 121P of the battery cell 121_6, respectively.

The busbar 123_6 may contact the negative terminal 121N of the battery cell 121_6 and the positive terminal 121P of the battery cell 121_7, respectively. The busbar 123_6 may be welded to the negative terminal 121N of the battery cell 121_6 and the positive terminal 121P of the battery cell 121_7, respectively.

The busbar 123_7 may contact the negative terminal 121N of the battery cell 121_7 and the positive terminal 121P of the battery cell 121_8, respectively. The busbar 123_7 may be welded to the negative terminal 121N of the battery cell 121_7 and the positive terminal 121P of the battery cell 121_8, respectively.

The circuit opening device 125_1 may be interposed between the negative terminal 121N of the battery cell 121_1 and the positive terminal 121P of the battery cell 121_2. The circuit opening device 125_1 may overlap the negative terminal 121N of the battery cell 121_1 and the positive terminal 121P of the battery cell 121_2 in the X direction. The circuit opening device 125_1 may overlap the busbar 123_1 in the Y direction.

The circuit opening device 125_2 may be interposed between the negative terminal 121N of the battery cell 121_2 and the positive terminal 121P of the battery cell 121_3. The circuit opening device 125_2 may overlap with the negative terminal 121N of the battery cell 121_2 and the positive terminal 121P of the battery cell 121_3, respectively, in the X direction. The circuit opening device 125_2 may overlap with the busbar 123_2 in the Y direction.

The circuit opening device 125_3 may be interposed between the negative terminal 121N of the battery cell 121_3 and the positive terminal 121P of the battery cell 121_4. The circuit opening device 125_3 may overlap with the negative terminal 121N of the battery cell 121_3 and the positive terminal 121P of the battery cell 121_4, respectively, in the X direction. The circuit opening device 125_3 may overlap with the busbar 123_3 in the Y direction.

The circuit opening device 125_4 may be interposed between the negative terminal 121N of the battery cell 121_4 and the positive terminal 121P of the battery cell 121_5. The circuit opening device 125_4 may overlap with the negative terminal 121N of the battery cell 121_4 and the positive terminal 121P of the battery cell 121_5, respectively, in the X direction. The circuit opening device 125_4 may overlap with the busbar 123_4 in the Y direction.

The circuit opening device 125_5 may be interposed between the negative terminal 121N of battery cell 121_5 and the positive terminal 121P of battery cell 121_6. The circuit opening device 125_5 may overlap with the negative terminal 121N of the battery cell 121_5 and the positive terminal 121P of the battery cell 121_6, respectively, in the X direction. The circuit opening device 125_5 may overlap with the busbar 123_5 in the Y direction.

The circuit opening device 125_6 may be interposed between the negative terminal 121N of the battery cell 121_6 and the positive terminal 121P of the battery cell 121_7. The circuit opening device 125_6 may overlap with the negative terminal 121N of the battery cell 121_6 and the positive terminal 121P of the battery cell 121_7 in the X direction, respectively. The circuit opening device 125_6 may overlap with the busbar 123_6 in the Y direction.

The circuit opening device 125_7 may be interposed between the negative terminal 121N of the battery cell 121_7 and the positive terminal 121P of the battery cell 121_8. The circuit opening device 125_7 may overlap with the negative terminal 121N of the battery cell 121_7 and the positive terminal 121P of the battery cell 121_8 in the X direction, respectively. The circuit opening device 125_7 may overlap with the busbar 123_7 in the Y direction.

Each of the plurality of circuit opening devices 125_1 to 125_7 may include a thermally expandable material. Each of the plurality of circuit opening devices 125_1 to 125_7 may include a shape-memory alloy, but is not limited thereto.

Referring to FIGS. 2 and 3, the X-direction length of the circuit opening device 125_1 at temperatures above the critical temperature may differ from the X-direction length of the circuit opening device 125_1 at temperatures below the critical temperature. At temperatures above the critical temperature, the length of the circuit opening device 125_1 in the X direction may be greater than the length of the circuit opening device 125_1 in the X direction at temperatures below the critical temperature.

At temperatures above the critical temperature, the circuit opening device 125_1 may be configured to disconnect the connection between the negative terminal 121N of battery cell 121_1, the positive terminal 121P of battery cell 121_2, and the busbar 123_1. According to exemplary embodiments, the circuit opening device 125_1 can physically disconnect the connection between the battery cells 121_1 to 121_2 in the event of thermal runaway and exposure to external high temperatures, thereby enhancing the safety of the battery cell assembly 120. The operation of the circuit opening devices 125_2, 125_3, 125_4, 125_5, 125_6, 125_7 is substantially identical to that of the circuit opening device 125_1, so redundant description thereof is omitted.

According to exemplary embodiments, the critical temperature of each of the plurality of circuit opening devices 125_1~125_7 may be within a range of approximately 130°C to approximately 190°C. According to the exemplary embodiments, the critical temperature of each of the plurality of circuit opening devices 125_1~125_7 may be at or above approximately 140°C. According to the exemplary embodiments, the critical temperature of each of the plurality of circuit opening devices 125_1~125_7 may be at or above approximately 150°C. According to exemplary embodiments, the critical temperature of each of the plurality of circuit opening devices 125_1~125_7 may be approximately 180°C or lower. According to exemplary embodiments, the critical temperature of each of the plurality of circuit opening devices 125_1~125_7 may be approximately 170°C or lower.

Each of the plurality of insulating layers 127_1~127_7 may include an insulating material. Each of the plurality of insulating layers 127_1 ~127_7 may include an adhesive material. According to exemplary embodiments, each of the plurality of insulating layers 127_1~127_7 may include, for example, a thermal resin. According to exemplary embodiments, each of the plurality insulating layers 127_1~127_7 may include, for example, a tape.

The insulating layer 127_1 may contact the circuit opening device 125_1. The insulating layer 127_1 may contact the negative terminal 121N of the battery cell 121_1. The insulating layer 127_1 may contact the positive terminal 121P of the battery cell 121_2. The insulating layer 127_1 may contact the busbar 123_1.

The insulating layer 127_1 may include a portion interposed between the circuit opening device 125_1 and the negative terminal 121N of the battery cell 121_1. The insulating layer 127_1 may fix the circuit opening device 125_1 and the negative terminal 121N of the battery cell 121_1. The insulating layer 127_1 may prevent a short circuit between the circuit opening device 125_1 and the negative terminal 121N of the battery cell 121_1.

The insulating layer 127_1 may include a portion interposed between the circuit opening device 125_1 and the positive terminal 121P of the battery cell 121_2. The insulating layer 127_1 may fix the circuit opening device 125_1 and the positive terminal 121P of the battery cell 121_2. The insulating layer 127_1 may prevent a short circuit between the circuit opening device 125_1 and the positive terminal 121P of the battery cell 121_2.

The insulating layer 127_1 may include a portion interposed between the circuit opening device 125_1 and the busbar 123_1. The insulating layer 127_1 may fix the circuit opening device 125_1 and the busbar 123_1. The insulating layer 127_1 may prevent a short circuit between the circuit opening device 125_1 and the busbar 123_1.

The insulating layer 127_2 may contact the circuit opening device 125_2. The insulating layer 127_2 may contact the negative terminal 121N of the battery cell 121_2. The insulating layer 127_2 may contact the positive terminal 121P of the battery cell 121_3. The insulating layer 127_2 may contact the busbar 123_2.

The insulating layer 127_2 may include a portion interposed between the circuit opening device 125_2 and the negative terminal 121N of the battery cell 121_2. The insulating layer 127_2 may fix the circuit opening device 125_2 and the negative terminal 121N of the battery cell 121_2. The insulating layer 127_2 may prevent a short circuit between the circuit opening device 125_2 and the negative terminal 121N of the battery cell 121_2.

The insulating layer 127_2 may include a portion interposed between the circuit opening device 125_2 and the positive terminal 121P of the battery cell 121_3. The insulating layer 127_2 may fix the circuit opening device 125_2 and the positive terminal 121P of the battery cell 121_3. The insulating layer 127_2 may prevent a short circuit between the circuit opening device 125_2 and the positive terminal 121P of the battery cell 121_3.

The insulating layer 127_2 may include a portion interposed between the circuit opening device 125_2 and the busbar 123_2. The insulating layer 127_2 may fix the circuit opening device 125_2 and the busbar 123_2. The insulating layer 127_2 may prevent a short circuit between the circuit opening device 125_2 and the busbar 123_2.

The insulating layer 127_3 may contact the circuit opening device 125_3. The insulating layer 127_3 may contact the negative terminal 121N of the battery cell 121_3. The insulating layer 127_3 may contact the positive terminal 121P of the battery cell 121_4. The insulating layer 127_3 may contact the busbar 123_3.

The insulating layer 127_3 may include a portion interposed between the circuit opening device 125_3 and the negative terminal 121N of the battery cell 121_3. The insulating layer 127_3 may fix the circuit opening device 125_3 and the negative terminal 121N of the battery cell 121_3. The insulating layer 127_3 may prevent a short circuit between the circuit opening device 125_3 and the negative terminal 121N of the battery cell 121_3.

The insulating layer 127_3 may include a portion interposed between the circuit opening device 125_3 and the positive terminal 121P of the battery cell 121_4. The insulating layer 127_3 may fix the circuit opening device 125_3 and the positive terminal 121P of the battery cell 121_4. The insulating layer 127_3 may prevent a short circuit between the circuit opening device 125_3 and the positive terminal 121P of the battery cell 121_4.

The insulating layer 127_3 may include a portion interposed between the circuit opening device 125_3 and the busbar 123_3. The insulating layer 127_3 may fix the circuit opening device 125_3 and the busbar 123_3. The insulating layer 127_3 may prevent a short circuit between the circuit opening device 125_3 and the busbar 123_3.

The insulating layer 127_4 may contact the circuit opening device 125_4. The insulating layer 127_4 may contact the negative terminal 121N of the battery cell 121_4. The insulating layer 127_4 may contact the positive terminal 121P of the battery cell 121_5. The insulating layer 127_4 may contact the busbar 123_4.

The insulating layer 127_4 may include a portion interposed between the circuit opening device 125_4 and the negative terminal 121N of the battery cell 121_4. The insulating layer 127_4 may fix the circuit opening device 125_4 and the negative terminal 121N of the battery cell 121_4. The insulating layer 127_4 may prevent a short circuit between the circuit opening device 125_4 and the negative terminal 121N of the battery cell 121_4.

The insulating layer 127_4 may include a portion interposed between the circuit opening device 125_4 and the positive terminal 121P of the battery cell 121_5. The insulating layer 127_4 may fix the circuit opening device 125_4 and the positive terminal 121P of the battery cell 121_5. The insulating layer 127_4 may prevent a short circuit between the circuit opening device 125_4 and the positive terminal 121P of the battery cell 121_5.

The insulating layer 127_4 may include a portion interposed between the circuit opening device 125_4 and the busbar 123_4. The insulating layer 127_4 may fix the circuit opening device 125_4 and the busbar 123_4. The insulating layer 127_4 may prevent a short circuit between the circuit opening device 125_4 and the busbar 123_4.

The insulating layer 127_5 may contact the circuit opening device 125_5. The insulating layer 127_5 may contact the negative terminal 121N of the battery cell 121_5. The insulating layer 127_5 may contact the positive terminal 121P of the battery cell 121_6. The insulating layer 127_5 may contact the busbar 123_5.

The insulating layer 127_5 may include a portion interposed between the circuit opening device 125_5 and the negative terminal 121N of the battery cell 121_5. The insulating layer 127_5 may fix the circuit opening device 125_5 and the negative terminal 121N of the battery cell 121_5. The insulating layer 127_5 may prevent a short circuit between the circuit opening device 125_5 and the negative terminal 121N of the battery cell 121_5.

The insulating layer 127_5 may include a portion interposed between the circuit opening device 125_5 and the positive terminal 121P of the battery cell 121_6. The insulating layer 127_5 may fix the circuit opening device 125_5 and the positive terminal 121P of the battery cell 121_6. The insulating layer 127_5 may prevent a short circuit between the circuit opening device 125_5 and the positive terminal 121P of the battery cell 121_6.

The insulating layer 127_5 may include a portion interposed between the circuit opening device 125_5 and the busbar 123_5. The insulating layer 127_5 may fix the circuit opening device 125_5 and the busbar 123_5. The insulating layer 127_5 may prevent a short circuit between the circuit opening device 125_5 and the busbar 123_5.

The insulating layer 127_6 may contact the circuit opening device 125_6. The insulating layer 127_6 may contact the negative terminal 121N of the battery cell 121_6. The insulating layer 127_6 may contact the positive terminal 121P of the battery cell 121_7. The insulating layer 127_6 may contact the busbar 123_6.

The insulating layer 127_6 may include a portion interposed between the circuit opening device 125_6 and the negative terminal 121N of the battery cell 121_6. The insulating layer 127_6 may fix the circuit opening device 125_6 and the negative terminal 121N of the battery cell 121_6. The insulating layer 127_6 may prevent a short circuit between the circuit opening device 125_6 and the negative terminal 121N of the battery cell 121_6.

The insulating layer 127_6 may include a portion interposed between the circuit opening device 125_6 and the positive terminal 121P of the battery cell 121_7. The insulating layer 127_6 may secure the circuit opening device 125_6 and the positive terminal 121P of the battery cell 121_7. The insulating layer 127_6 may prevent a short circuit between the circuit opening device 125_6 and the positive terminal 121P of the battery cell 121_7.

The insulating layer 127_6 may include a portion interposed between the circuit opening device 125_6 and the busbar 123_6. The insulating layer 127_6 may fix the circuit opening device 125_6 and the busbar 123_6. The insulating layer 127_6 may prevent a short circuit between the circuit opening device 125_6 and the busbar 123_6.

The insulating layer 127_7 may contact the circuit opening device 125_7. The insulating layer 127_7 may contact the negative terminal 121N of the battery cell 121_7. The insulating layer 127_7 may contact the positive terminal 121P of the battery cell 121_8. The insulating layer 127_7 may contact the busbar 123_7.

The insulating layer 127_7 may include a portion interposed between the circuit opening device 125_7 and the negative terminal 121N of the battery cell 121_7. The insulating layer 127_7 may fix the circuit opening device 125_7 and the negative terminal 121N of the battery cell 121_7. The insulating layer 127_7 may prevent a short circuit between the circuit opening device 125_7 and the negative terminal 121N of the battery cell 121_7.

The insulating layer 127_7 may include a portion interposed between the circuit opening device 125_7 and the positive terminal 121P of the battery cell 121_8. The insulating layer 127_7 may fix the circuit opening device 125_7 and the positive terminal 121P of the battery cell 121_8. The insulating layer 127_7 may prevent a short circuit between the circuit opening device 125_7 and the positive terminal 121P of the battery cell 121_8.

The insulating layer 127_7 may include a portion interposed between the circuit opening device 125_7 and the busbar 123_7. The insulating layer 127_7 may secure the circuit opening device 125_7 and the busbar 123_7. The insulating layer 127_7 may prevent a short circuit between the circuit opening device 125_7 and the busbar 123_7.

### (Second embodiment)

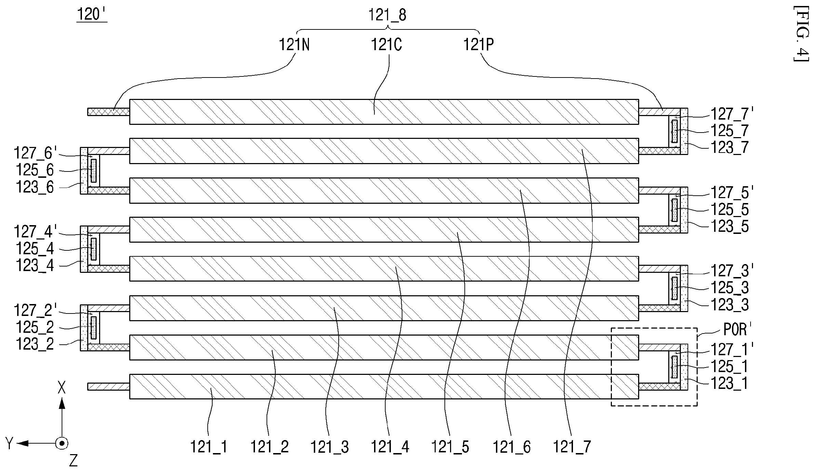

FIG. 4 is a plan view of a battery cell assembly 120' according to exemplary embodiments.

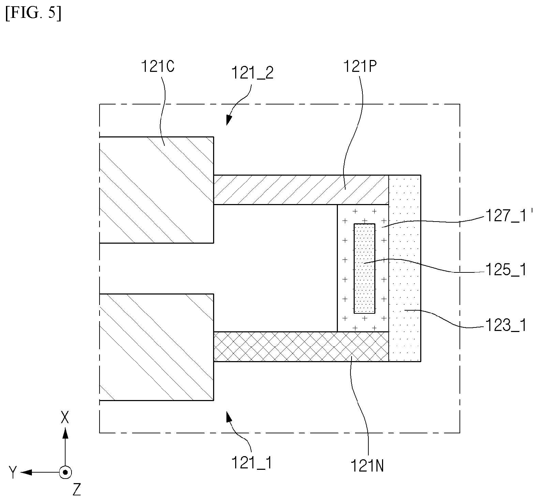

FIG. 5 shows a portion POR' of FIG. 4.

Referring to FIGS. 4 and 5, the battery cell assembly 120' includes a plurality of battery cells 121_1~121_8, a plurality of busbars 123_1~123_7, a plurality of circuit opening devices 125_1~125_7, and a plurality of insulating layers 127_1', 127_2', 127_3', 127_4', 127_5', 127_6', 127_7', hereinafter 127_1'~127_7.

The plurality of battery cells 121_1~121_8, the plurality of busbars 123_1~123_7, and the plurality of circuit opening devices 125_1~125_7 are substantially identical to those described with reference to FIGS. 1 and 2; therefore, redundant descriptions thereof are omitted.

The plurality of insulating layers 127_1'~127_7' may be an insulating coating applied to the plurality of circuit opening devices 125_1~125_7. Accordingly, the plurality of insulating layers 127_1'~127_7' may surround corresponding ones of the plurality of circuit opening devices 125_1~125_7.

The circuit opening device 125_1 may be integrated within the insulating layer 127_1'. The circuit opening device 125_1 may be embedded in the insulating layer 127_1'. The circuit opening device 125_2 may be integrated within the insulating layer 127_2'. The circuit opening device 125_2 may be embedded within the insulating layer 127_2'. The circuit opening device 125_3 may be integrated within the insulating layer 127_3'. The circuit opening device 125_3 may be embedded within the insulating layer 127_3'. The circuit opening device 125_4 may be integrated within the insulating layer 127_4'. The circuit opening device 125_4 may be embedded within the insulating layer 127_4'. The circuit opening device 125_5 may be integrated within the insulating layer 127_5'. The circuit opening device 125_5 may be embedded within the insulating layer 127_5'. The circuit opening device 125_6 may be integrated within the insulating layer 127_6'. The circuit opening device 125_6 may be embedded within the insulating layer 127_6'. The circuit opening device 125_7 may be integrated within the insulating layer 127_7'. The circuit opening device 125_7 may be embedded in the insulating layer 127_7'.

### (Third embodiment)

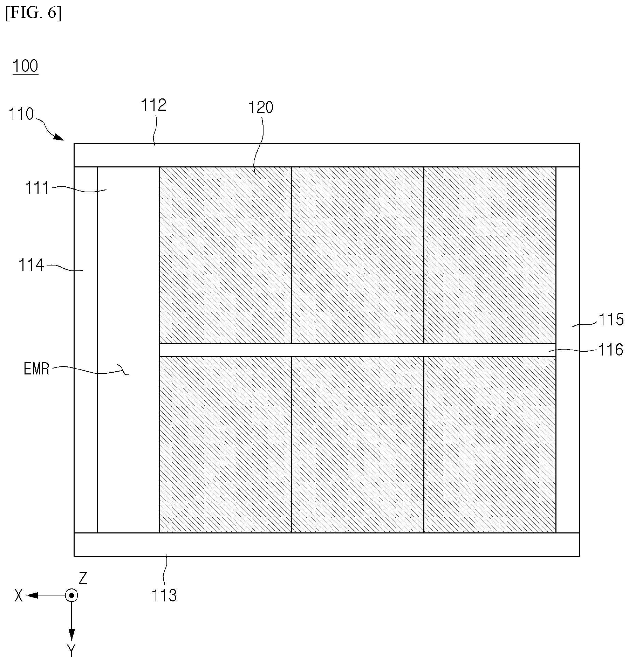

FIG. 6 is a plan view illustrating a battery pack 100 according to exemplary embodiments.

Referring to FIG. 6, the battery pack 100 may include a pack housing 110 and a plurality of battery cell assemblies 120. The battery pack 100 is the final form of the battery system mounted in mobility devices, etc.

The pack housing 110 may provide space for plurality of battery cell assemblies 120 to be disposed. The pack housing 110 may include a base plate 111, side walls 112, 113, 114, 115, and a center beam 116.

The mounting surface of the base plate 111 (i.e., the surface facing the plurality of battery cell assemblies 120) may be substantially parallel to both the X direction and the Y direction. A direction substantially perpendicular to the mounting surface of the base plate 111 is defined as the Z direction.

The base plate 111 and each side wall 112, 113 may be provided by an extrusion process. The extrusion direction of the base plate 111 and each side wall 112, 113 may be the X direction. That is, the YZ cross-section of the base plate 111 and each side wall 112, 113 may be constant with respect to the position in the X direction, except for deformation due to additional tooling. Here, the YZ cross-section may be substantially parallel to the Y direction and the Z direction, and substantially perpendicular to the X direction. The base plate 111 and side walls 112, 113 may be arranged in the Y direction. Side walls 114, 115 may also be provided by the extrusion process.

According to exemplary embodiments, the base plate 111 and side walls 112, 113 may be coupled by friction stir welding. The base plate 111 may include a plurality of unit plates coupled by friction stir welding.

The center beam 116 may extend in the X direction. The center beam 116 may be interposed between the side walls 112, 113. The center beam 116 may be included in a center plate positioned at the center of the plurality of unit plates frictionally stirred welded together. Accordingly, the center beam 116 may be formed together with the center plate during the extrusion process, and the center beam 116 may be a continuous element integral with the center plate.

The base plate 111 may include plurality of cooling channels. The plurality of cooling channels may provide passages for the flow of a coolant, such as water. The plurality of cooling channels may be formed by an extrusion process. The plurality of cooling channels may extend in the X direction. The plurality of cooling channels may be spaced apart in the Y direction.

A plurality of battery cell assemblies 120 may be positioned on a base plate 111 of the pack housing 110. The base plate 111 may support the plurality of battery cell assemblies 120. Side walls 112, 113, 114, 115 may horizontally surround the plurality of battery cell assemblies 120.

The battery pack 100 may further include leads. The leads may be coupled to the side walls 112, 113, 114, 115. The leads may be fixed to the side walls 112, 113, 114, 115 by mechanical means such as bolts. The leads may cover elements placed inside the battery pack 100, such as battery cell assemblies 120 and electrical components. A gasket may be interposed between the leads and the side walls 112, 113, 114, 115. The gasket may provide liquid tightness to the battery pack 100.

The battery pack 100 may further include electrical components. The electrical components may include any electronic devices necessary to operate the battery pack. The electrical components may be located on an electrical component mounting region (EMR). The electrical component mounting region (EMR) may be the space between the side wall 114 and the battery cell assemblies 120.

The electronic components may include, for example, a Battery Management System (BMS). The BMS may be configured to perform monitoring, balancing, and control of the battery pack. Monitoring of the battery pack 100 may include measuring voltages and currents at specific nodes within the plurality of battery cell assemblies 120 and measuring temperatures at set locations within the battery pack 100. The battery pack 100 may include instrumentation for measuring the aforementioned voltages, currents, and temperatures.

Balancing of the battery pack 100 is an operation that reduces deviations between the plurality of battery cell assemblies 120. Controlling the battery pack 100 includes preventing the occurrence of overcharging, over-discharging, and overcurrent. Through monitoring, balancing, and control, the battery pack 100 can operate under optimal conditions, thereby preventing the shortened lifespan of each of the plurality of battery cell assemblies 120.

The electrical components may further include a cooling device, a PRA (Power Relay Assembly), a safety plug, etc. The cooling device may include a cooling fan. The cooling fan can prevent overheating of each of the plurality of battery cell assemblies 120 by circulating air within the battery pack 100. The PRA can be configured to supply or interrupt power from the high-voltage battery to an external load (e.g., a vehicle motor). The PRA can protect the plurality of battery cell assemblies 120 and the external load (e.g., a vehicle motor) by disconnecting the power supply to the external load (e.g., a vehicle motor) in situations where abnormal voltages, such as voltage surges, occur.

The battery pack 100 may further include plurality of venting devices. The plurality of venting devices may be installed on any one of the leads and side walls 112, 113, 114, 115. The plurality of venting devices can provide a path for releasing high-temperature gas from inside the battery pack 100 to the outside when a thermal runaway event occurs in some of the battery cell assemblies 120. Accordingly, thermal propagation can be delayed, and the stability of the battery pack 100 can be enhanced.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery cell assembly comprising:
a first battery cell comprising a first positive terminal and a first negative terminal;
a second battery cell comprising a second positive terminal and a second negative terminal;
a first busbar welded to the first negative terminal of the first battery cell and the second positive terminal of the second battery cell, respectively;
a first circuit opening device interposed between the first negative terminal and the second positive terminal; and
a first insulating layer isolating the first circuit opening device from the first negative terminal, the second positive terminal, and the first busbar.

2. The battery cell assembly of claim 1, wherein
the first circuit opening device comprises a thermally expandable material.

3. The battery cell assembly of claim 1, wherein
the first circuit opening device comprises a shape-memory alloy.

4. The battery cell assembly of claim 1, wherein
the first and second battery cells are arranged in a first direction, and
the length of the first circuit opening device in the first direction at a first temperature above a critical temperature is longer than the length of the first circuit opening device in the first direction at a second temperature below the critical temperature.

5. The battery cell assembly of claim 4, wherein
the critical temperature is within the range of 130°C to 190°C.

6. The battery cell assembly of claim 4, wherein
at the first temperature, the first circuit opening device is configured to disconnect a connection between the first bus bar and the positive terminal and the first negative terminal.

7. The battery cell assembly of claim 1, wherein
the first insulating layer comprises a first portion interposed between the first circuit opening device and the first negative terminal, a second portion interposed between the first circuit opening device and the second positive terminal, and a third portion interposed between the first circuit opening device and the first busbar.

8. The battery cell assembly of claim 1, wherein
the first insulating layer has insulating and adhesive properties.

9. The battery cell assembly of claim 1, wherein
the first insulating layer is a thermal resin.

10. The battery cell assembly of claim 1, wherein
the first circuit opening device is embedded in the first insulating layer.

11. The battery cell assembly of claim 1, comprising:
a third battery cell comprising a third positive terminal and a third negative terminal;
a second busbar welded to the second negative terminal of the second battery cell and the third positive terminal of the third battery cell, respectively;
a second circuit opening device interposed between the second negative terminal and the third positive terminal; and
a second insulating layer isolating the second circuit opening device from the second negative terminal, the third positive terminal, and the second busbar.

12. A battery pack comprising:
a pack housing comprising a base plate; and
a plurality of battery cell assemblies on the pack housing, wherein
each of the battery cell assembly comprises: a first battery cell comprising a first positive terminal and a first negative terminal; a second battery cell comprising a second positive terminal and a second negative terminal; a first busbar welded to the first negative terminal of the first battery cell and the second positive terminal of the second battery cell, respectively; a first circuit opening device interposed between the first negative terminal and the second positive terminal; and a first insulating layer isolating the first circuit opening device from the first negative terminal, the second positive terminal, and the first busbar.

13. The battery pack of claim 12, wherein
the first circuit opening device comprises a shape-memory alloy.

14. The battery pack of claim 12, wherein
the first insulating layer comprises a first portion interposed between the first circuit opening device and the first negative terminal, a second portion interposed between the first circuit opening device and the second positive terminal, and a third portion interposed between the first circuit opening device and the first busbar.

15. The battery pack of claim 12, wherein
the first insulating layer has insulating properties and adhesive properties.

16. The battery pack of claim 12, wherein
the first insulating layer is a thermal resin.

17. The battery pack of claim 12, wherein
the first circuit opening device is embedded in the first insulating layer.
